(19) **Europäisches Patentamt**
**European Patent Office**
**Office européen des brevets**

(11) **EP 4 369 001 B1**

(12) **EUROPEAN PATENT SPECIFICATION**

(45) Date of publication and mention
of the grant of the patent:
**06.08.2025   Bulletin 2025/32**

(51) International Patent Classification (IPC):
***G01P 3/36*** *(2006.01)*      ***G01S 17/58*** *(2006.01)*

(52) Cooperative Patent Classification (CPC):
**G01P 3/366; G01S 17/58**

(21) Application number: **23200838.3**

(22) Date of filing: **29.09.2023**

(54) **LASER VEHICLE SPEED DETECTION SYSTEM**

LASERSYSTEM ZUR GESCHWINDIGKEITSERFASSUNG EINES FAHRZEUGS

SYSTÈME DE DÉTECTION DE VITESSE DE VÉHICULE À LASER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **09.11.2022   US 202218054070**

(43) Date of publication of application:
**15.05.2024   Bulletin 2024/20**

(73) Proprietor: **The Boeing Company
Arlington, VA 22202 (US)**

(72) Inventors:
 • **HILLER, Nathan D.**
**Arlington, 22202 (US)**
 • **DOWGWILLO, Robert M.**
**Arlington, 22202 (US)**
 • **BAKHLE, Ishaan**
**Arlington, 22202 (US)**
 • **SHOEMAKER, Christopher**
**Arlington, 22202 (US)**

(74) Representative: **Sandri, Sandro
Bugnion S.P.A.
Via Pancaldo 68
37138 Verona (IT)**

(56) References cited:
**US-A1- 2016 170 023     US-A1- 2016 377 721**

## Description

### 1. Field:

The present disclosure relates generally to sensors and in particular, to a method, apparatus, system for detecting a speed of a moving vehicle.

### 2. Background:

A sensor such as a pitot tube is used to detect the speed of an aircraft. However, this type of sensor protrudes from the surface of aircraft to place the pitot tube into the airflow. This protrusion makes this type of sensor susceptible to environmental conditions. For example, the unintended impacts, such as bird or insect strikes, can occur on a pitot tube. Other environmental issues include ice formation on the pitot tube.

Another type of sensor used for detecting airspeed is a light detection and ranging (LIDAR) sensor. With a LIDAR sensor, a laser beam is transmitted into the air and backscatter generated in response to the laser beam is detected. The airspeed of the aircraft can be determined by comparing the frequency of the laser beam to the frequency in the backscatter. This shift in frequency can be used to calculate the speed of the aircraft.

Patent document US2016377721 A1 discloses a LIDAR system installed on a helicopter for determining the helicopter's air speed. A laser beam is emitted from the helicopter, and light backscattered from the atmosphere is superimposed with time-delayed emission laser light to determine a beat frequency. The air speed of the helicopter is determined based on the beat frequency.

### SUMMARY

The present disclosure provides a method that detects a speed of a vehicle. A backscatter light generated in response to transmitting a laser beam into an atmosphere during movement of the vehicle is received. A first beat frequency from interfering a first portion of the backscatter light with a reference light derived from the laser beam is measured. A time delay is introduced to a second portion of the backscatter light to form a time delayed backscatter light. A second beat frequency from interfering the time delayed backscatter light with the reference light is measured. The second beat frequency is time delayed from the first beat frequency. A difference between the first beat frequency and the second beat frequency is determined. The speed of the vehicle using the difference between the first beat frequency and the second beat frequency is determined.

Furthermore, in the present disclosure, a method detects speed of an aircraft. A laser beam is transmitted into an atmosphere from an aircraft during flight of the aircraft. A backscatter light generated in response to transmitting the laser beam is received. A first beat frequency from interfering a first portion of the backscatter light with a reference light derived from the laser beam is measured. A time delay is introduced to a second portion of the backscatter light to form a time delayed backscatter light. A second beat frequency from interfering the time delayed backscatter light with the reference light is measured. A difference between the first beat frequency and the second beat frequency is determined. A speed of the aircraft is determined using the beat frequency and the difference.

Yet, in the present disclosure, a speed detection system comprises a laser beam generator, an interference system, a detector system, and a speed analyzer. The laser beam generator is configured to emit a laser beam into an atmosphere from a vehicle. The interference system is configured to interfere a first portion of a backscatter light received with a reference light to form a first beat frequency, introduce a time delay to a second portion of the backscatter light to form a time delayed backscatter light, and interfere a time delayed backscatter light with the reference light to form a second beat frequency. The backscatter light received in response to the laser beam being emitted into the atmosphere and the reference light is derived from the laser beam. The detector system is configured to measure a first beat frequency from interfering the first portion of the backscatter light with the reference light and measure a second beat frequency from interfering the time delayed backscatter light with the reference light. The speed analyzer is configured to determine a speed to the vehicle using the first beat frequency and a difference between the first beat frequency and the second beat frequency.

Moreover, in the present disclosure, a speed detection system comprises a laser beam generator, a first path, a second path, and a speed analyzer. The laser beam generator is configured to emit a laser beam into an atmosphere from a vehicle. The first path interferes a first portion of a backscatter light received with a reference light and measures a first beat frequency from the first portion of the backscatter light interfered with the reference light. The second path introduces a time delay to a second portion of the backscatter light to form a time delayed backscatter light, interferes a time delayed backscatter light with the reference light, and measures a second beat frequency from interfering the time delayed backscatter light with the reference light. The speed analyzer is connected to the first path and the second path in which the speed analyzer receives the first beat frequency from the first path, receive the second beat frequency from the second path, and determines a speed of the vehicle using the first beat frequency and determines the speed using the second beat frequency in response to the first path being out of tolerance.

Additionally, in the present disclosure, a speed detection system comprises a laser beam generator, an interference system, a detector system, and a speed analyzer. The laser beam generator is configured to emit a laser beam into an atmosphere from a vehicle. The interference system is configured to interfere a first portion of a backscatter light received with a reference light to form a first beat frequency, introduce a time delay to a second portion of the backscatter light to form a time delayed backscatter light, and interfere a time delayed backscatter light with the reference light to form a second beat frequency. The backscatter light received in response to the laser beam being emitted into the atmosphere and the reference light is derived from the laser beam. The detector system is configured to measure a first beat frequency from frequency from interfering the first portion of the backscatter light with the reference light and measure a second beat frequency from interfering the time delayed backscatter light with the reference light. The speed analyzer is configured to determine a first speed using the first beat frequency, determine a second speed using the second beat frequency, determine a third speed using a difference between the first beat frequency and the second beat frequency, and determine the speed for the vehicle as an average of the first speed, the second speed, and the third speed.

Further details can be seen with reference to the following description and drawings.

## BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

**Figure 1** is an illustration of an aircraft in accordance with an illustrative embodiment;
**Figure 2** is a block diagram of a speed detection environment in accordance with an illustrative embodiment;
**Figure 3** is an illustration of a speed detection system in accordance with an illustrative embodiment;
**Figure 4** is an illustration of light used to determine the speed of the vehicle in accordance with an illustrative embodiment;
**Figure 5** is an illustration of a speed detection system in accordance with an illustrative embodiment;
**Figure 6** is an illustration of a flowchart of a process for determining speed for a vehicle aircraft in accordance with an illustrative embodiment;
**Figure 7** is an illustration of a flowchart of a process for determining speed for a vehicle aircraft in accordance with an illustrative embodiment;
**Figure 8** is an illustration of a flowchart of a process for interfering a backscatter light with a reference light to generate a beat frequency in accordance with an illustrative embodiment;
**Figure 9** is an illustration of a flowchart of a process for determining a speed of a vehicle using a difference between a beat frequency and a time delayed beat frequency in accordance with an illustrative embodiment;
**Figure 10** is an illustration of a flowchart of a process for measuring a beat frequency from interfering an oppositely time delayed backscatter light with a reference light in accordance with an illustrative embodiment;
**Figure 11** is an illustration of a flowchart of a process for detecting a speed of an aircraft in accordance with an illustrative embodiment;
**Figure 12** is an illustration of a flowchart of a process for measuring a beat frequency from interfering an oppositely time delayed backscatter light with a reference light in accordance with an illustrative embodiment;
**Figure 13** is an illustration of an aircraft manufacturing and service method in accordance with an illustrative embodiment; and
**Figure 14** is an illustration of a block diagram of an aircraft in which an illustrative embodiment may be implemented.

## DETAILED DESCRIPTION

The illustrative embodiments recognize and take into account one or more different considerations as described herein. For example, the illustrative embodiments recognize and take into account that when using a laser beam to detect speed, the aircraft transmits a laser beam and compares that transmitted light to light received in response to transmission of the laser beam. Aircraft transmits the laser beam into the air which encounters airborne particles. For example, with a coherent LIDAR system, a small fraction of laser beam is scattered by ice crystals, dust, and other particles. This scattering results in a shift in frequency. Some of the scattered light reaches the aircraft and is detected as backscatter.

However, at different altitudes different amounts of particles may be present. For example, at lower elevations, plenty of particles are present to scatter a laser beam. This lower elevation can be, for example, 6,096 m (20,000 feet) to 9,144 m (30,000 feet). As result, the backscatter received at this lower elevation is greater than at a mid-elevation. The mid-elevation elevation can be, for example, 9,144 m (30,000 feet) to 12,192 m (40,000 feet). At a mid-elevation, fewer particles are present to scatter the laser beam. As a result, a weaker backscatter is received by the aircraft. At a high elevation above the mid-elevation, plenty of particles are present resulting in a stronger backscatter being received as compared to the mid-elevation. As a result, at mid-altitudes, the power of the backscatter light received can be low enough to reduce performance in detecting the speed of the aircraft.

Thus, the illustrative embodiments provide a method and system that detect a speed of a vehicle. A backscatter light generated in response to transmitting a laser beam into an atmosphere during movement of the vehicle is received. A first beat frequency from interfering a first portion of the backscatter light with a reference light derived from the laser beam is measured. A time delay is introduced to a second portion of the backscatter light to form a time delayed backscatter light. A second beat frequency from interfering the time delayed backscatter light with the reference light is measured. The second beat frequency is time delayed from the first beat frequency. A difference between the first beat frequency and the second beat frequency is determined. The speed of the vehicle using the difference between the first beat frequency and the second beat frequency is determined.

Additionally, at least one of the first beat frequency or the second beat frequency can also be used to determine speed in addition to using the difference between the first beat frequency and the second beat frequency. The phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

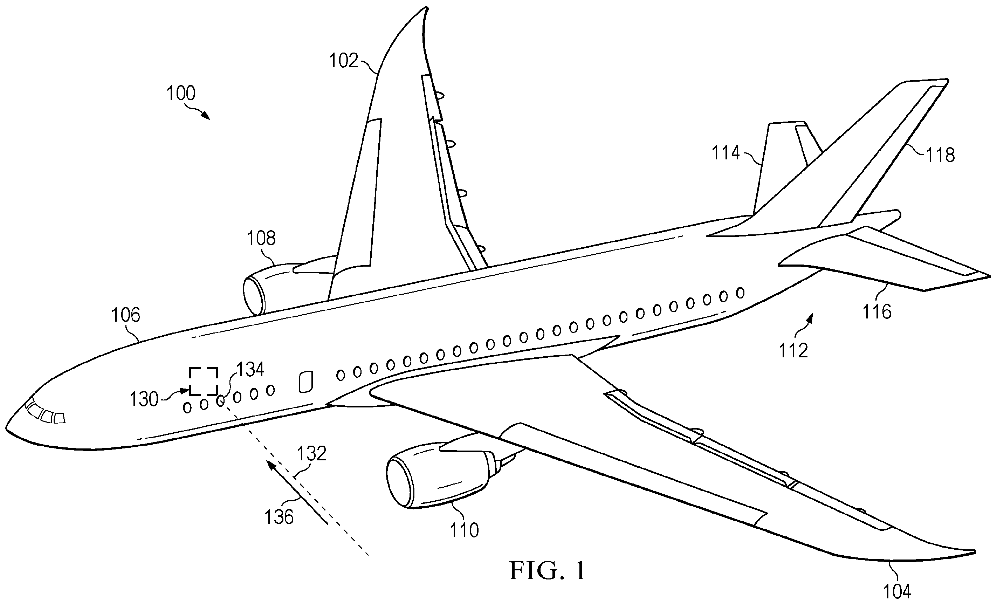

With reference now to the figures, and in particular, with reference to **Figure 1,** an illustration of an aircraft is depicted in accordance with an illustrative embodiment. In this illustrative example, commercial airplane **100** has wing **102** and wing **104** attached to body **106.** Commercial airplane **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Commercial airplane **100** is an example of an aircraft in which speed detection system **130** can be implemented in accordance with an illustrative embodiment. In this illustrative example, speed detection system **130** can operate to emit laser beam **132** from window **134** and receive backscatter **136** generated in response to emitting laser beam **132.** Laser beam **132** and backscatter **136** can be compared to determine the speed of commercial airplane **100.**

In this illustrative example, speed detection system **130** can increase performance in detecting speed of commercial airplane **100** through introducing a time delay in backscatter **136.** This time delayed backscatter can be compared to a reference light generated from laser beam **132.** This comparison can provide increased performance in determining speed of commercial airplane **100.** Additionally, this difference can be used along with determining a beat frequency from the interference of a reference light derived from laser beam **132** and backscatter **136.** This additional feature can provide an increase in performance in detecting the speed of commercial airplane **100.**

This increased performance can be especially useful at elevations where fewer airborne particles are present. As a result, speed detection system **130** can reduce issues with elevations such as mid-elevations where fewer particles are present to scatter laser beam **132.** As a result, using at least one of a beat frequency or a time delay in the beat frequencies can provide increase performance as compared to currently available speed detection systems using laser beams.

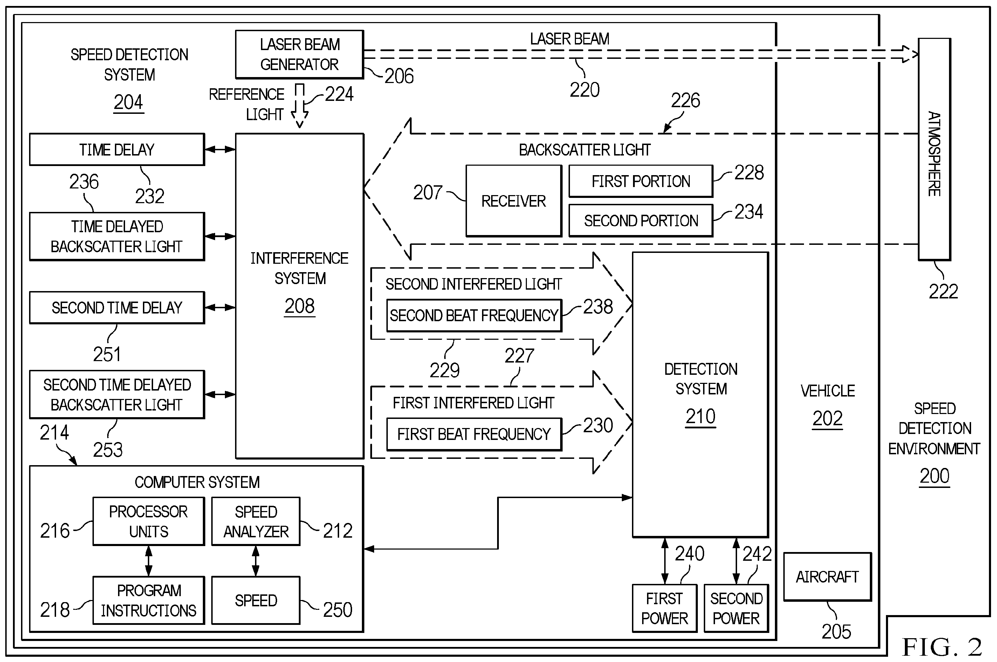

With reference now to **Figure 2,** a block diagram of a speed detection environment is depicted in accordance with an illustrative embodiment. In this illustrative example, speed detection environment **200** is an environment in which the speed for vehicle **202** can be detected using speed detection system **204.** In this example, vehicle **202** can take the form of aircraft **205.** Commercial airplane **100** in **Figure 1** is an example of one implementation for aircraft **205.** Vehicle **202** can be selected from a group comprising a mobile platform, aircraft, commercial airplane **100,** a cargo airplane, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a submarine, a bus, an automobile, a motorcycle, and other suitable vehicles.

In this illustrative example, speed detection system **204** comprises a number of different components. As depicted, speed detection system **204** comprises laser beam generator **206,** receiver **207,** interference system **208,** detection system **210,** and speed analyzer **212.** With the use of laser beam generator **206** to generate laser beam **220,** speed detection system **204** can be a LIDAR system.

Speed analyzer **212** can be implemented in software, hardware, firmware or a combination thereof. When software is used, the operations performed by speed analyzer **212** can be implemented in program instructions configured to run on hardware, such as a processor unit. When firmware is used, the operations performed by speed analyzer **212** can be implemented in program instructions and data and stored in persistent memory to run on a processor unit. When hardware is employed, the hardware may include circuits that operate to perform the operations in speed analyzer **212.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

In this example, speed analyzer **212** can be located in computer system **214.** Computer system **214** is a physical hardware system and includes one or more data processing systems. When more than one data processing system is present in computer system **214,** those data processing systems are in communication with each other using a communications medium. The communications medium may be a network. The data processing systems may be selected from at least one of a computer, a server computer, a tablet, or some other suitable data processing system.

As depicted, computer system **214** includes a number of processor units **216** that are capable of executing program instructions **218** implementing processes in the illustrative examples. In other words, program instructions **218** are computer readable program instructions.

As used herein, a processor unit in the number of processor units **216** is a hardware device and is comprised of hardware circuits such as those on an integrated circuit that respond to and process instructions and program code that operate a computer. When the number of processor units **216** execute program instructions **218** for a process, the number of processor units **216** can be one or more processor units that are on the same computer or on different computers. In other words, the process can be distributed between processor units **216** on the same or different computers in a computer system **214.** Further, the number of processor units **216** can be of the same type or different type of processor units. For example, a number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, laser beam generator **206** is configured to emit laser beam **220** into atmosphere **222** from vehicle **202.** In this illustrative example, laser beam generator **206** can also generate reference light **224.** In this depicted example, reference light **224** is derived from laser beam **220** and has the same characteristics as laser beam **220.** For example, reference light **224** can have the same frequency and phase as laser beam **220.**

In one illustrative example, reference light **224** can be a portion of the coherent light that laser beam generator **206** generates and uses to emit laser beam **220.** In another illustrative example, reference light **224** can be derived from laser beam **220** by being split from laser beam **220.** In this example, reference light **224** can be a portion of laser beam **220.** In this illustrative example, laser beam generator **206** is in communication with interference system **208.** For example, laser beam generator **206** can send reference light **224** to interference system **208.**

As depicted, receiver **207** is a physical device that receives backscatter light **226** in response to the emission of laser beam **220** into atmosphere **222.** In this illustrative example, receiver **207** can be, for example, a structure containing lenses that receive backscatter light **226.** In one illustrative example, receiver **207** can be a telescope.

As depicted, receiver **207** is in communication with interference system **208.** Receiver **207** can send backscatter light **226** received by receiver **207** to interference system **208.**

In this illustrative example, interference system **208** is a physical system and operates to interfere first portion **228** of backscatter light **226** received with reference light **224** to form first interfered light **227** with first beat frequency **230,** introduce time delay **232** to second portion **234** of the backscatter light **226** to form time delayed backscatter light **236,** and interfere time delayed backscatter light **236** with reference light **224** to form second interfered light **229** with second beat frequency **238.** Time delay **232** can be dependent on a frequency of backscatter light **226.**

In this illustrative example, detection system **210** is in communication with interference system **208.** This is a physical component that receives first interfered light **227** and second interfered light **229** from interference system **208.** Detection system **210** detects first beat frequency **230** in first interfered light **227** and second beat frequency **238** in second interfered light **229.**

In this illustrative example, detection system **210** detects first power **240** for first interfered light **227** and second power **242** for second interfered light **229.** First power **240** and second power **242** can have an amplitude that increases and decreases with a frequency that is based on the interference of backscatter light **226** and time delayed backscatter light **236** with reference light **224.** The frequency of first power **240** is first beat frequency **230** and the frequency of second power **242** is second beat frequency **238** in this example.

Speed analyzer **212** in computer system **214** is in communication with detection system **210.** In this illustrative example, speed analyzer **212** receives first beat frequency **230** and second beat frequency **238** from detection system **210.** Speed analyzer **212** determines speed **250** for aircraft **205.** Speed **250** can be the airspeed of aircraft **205** during flight of aircraft **205.**

Thus, speed detection system **204** can determine speed **250** for vehicle **202** with increased accuracy. The use of first beat frequency **230,** second beat frequency **238,** and the difference between these two beat frequencies can provide increased accuracy in determining speed.

For example, speed analyzer **212** can determine speed **250** using the difference between first beat frequency **230** and second beat frequency **238.** This difference can be the difference in phase or time.

In another illustrative example, speed analyzer **212** can determine a first speed using first beat frequency **230** and a second speed using the difference between first beat frequency **230** and second beat frequency **238.** These two speeds can be used to determine speed **250.**

In another illustrative example, speed analyzer **212** can determine a first speed using second beat frequency **238** and a second speed using the difference between first beat frequency **230** and second beat frequency **238.** Speed **250** can be determined from these two speeds.

In yet another illustrative example, speed analyzer **212** can determine a first speed using first beat frequency **230,** a second speed using second beat frequency **238,** and a third speed using the difference between first beat frequency **230** and second beat frequency **238.** These three speeds can be analyzed to determine speed **250.** For example, the three speeds can be averaged to determine speed **250.**

As a result, speed **250** can be determined using different combinations of first beat frequency **230,** second beat frequency **238,** and a difference between first beat frequency **230** and second beat frequency **238.** The selection of which information to use can depend on the amount of backscatter light **226** that is received. In environmental conditions where lower levels of backscatter light **226,** the additional information can provide increased accuracy as compared to using only a beat frequency or a difference between a beat frequency to determine speed **250.**

In yet another illustrative example, interference system **208** can introduce second time delay **251** to first portion **228** of backscatter light **226** that is opposite to time delay **232.** This second time delay results in second time delayed backscatter light **253.** As result, the difference between first interfered light **227** using second time delayed backscatter light **253** and second interfered light **229** using time delayed backscatter light **236** is greater than using just time delay **232.** This additional time delay in the opposite direction of time delay **232** can provide a greater difference for use in determining speed **250.**

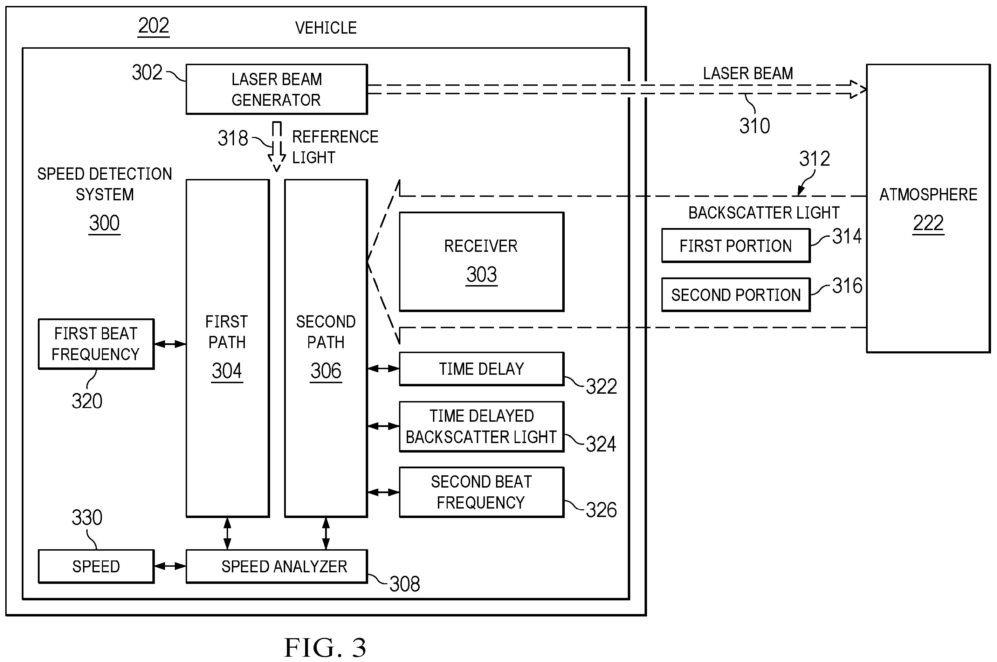

Turning next to **Figure 3,** an illustration of a speed detection system is depicted in accordance with an illustrative embodiment. In the illustrative examples, the same reference numeral may be used in more than one figure. This reuse of a reference numeral in different figures represents the same element in the different figures.

In this illustrative example, speed detection system **300** is an example of a speed detection system that can be implemented in vehicle **202** in speed detection environment **200** in **Figure 2.** In this depicted example, speed detection system **300** implements redundancy for detecting the speed of aircraft **205.** In this illustrative example, speed detection system **300** comprises a number of different components. As depicted, speed detection system **300** comprises laser beam generator **302,** receiver **303,** first path **304,** second path **306,** and speed analyzer **308.**

In this example, first path **304** and second path **306** are comprised of hardware components though which light can propagate. In this illustrative, second path **306** can be a redundant path to first path **304.** In other words, speed detection is performed using first path **304** until one or more components in first path **304** are unable to perform within a desired level or meet a specified tolerance. In response to this condition, the speed detection can be performed using second path **306.**

Further, in addition to redundancy, both paths can be used to provide increased accuracy in speed detection at elevations. The use of both paths can provide increased performance in speed detection when particle concentrations are not sufficient to provide a desired level of accuracy while using only a single path such as first path **304.**

In this illustrative example, laser beam generator **302** is configured to emit laser beam **310** into atmosphere **222** from vehicle **202.** As depicted, receiver **303** is a physical device that receives backscatter light **226** in response to the emission of laser beam **310** into atmosphere **222.**

As depicted, receiver **303** is a physical device that receives backscatter light **312** in response to the emission of laser beam **310** into atmosphere **222.**

Receiver **303** is in communication with first path **304** and second path **306.** First portion **228** of backscatter light **312** is sent from receiver **303** through first path **304.** Second portion **316** of backscatter light **312** is sent from receiver **303** through second path **306.**

In this illustrative example, first path **304** receives first portion **314** of backscatter light **312** received with reference light **318** from laser beam generator **302.** First path **304** measures first beat frequency **320** from first portion **314** of backscatter light **312** interfered with reference light **318.**

In this depicted example, second path **306** introduces time delay **322** to second portion **316** of the backscatter light **312** to form time delayed backscatter light **324,** interferes time delayed backscatter light **324** with reference light **318,** and measures second beat frequency **326** from interfering time delayed backscatter light **324** with reference light **318.**

As depicted, speed analyzer **308** is in communication with first path **304** and second path **306.** In this illustrative example, speed analyzer **308** receives first beat frequency **320** from first path **304** and receives second beat frequency **326** from second path **306.**

Speed analyzer **308** can determine speed **330** of vehicle **202** using first beat frequency **320.** Further speed analyzer **308** can determine speed **330** using second beat frequency **238** in response to first path **304** being out of tolerance for a desired level of accuracy. First path **304** can be out of tolerance by a component in first path **304** that fails or no longer operates within a specified tolerance. As a result, redundancy is provided by using second path **306** for speed detection. In another example, second path **306** can be the primary or normally used path with first path **304** providing redundancy.

As a further benefit, in addition to providing redundancy, speed detection system **204** can also operate to provide increased precision in speed detection by using first beat frequency **320** and second beat frequency **326** to determine speed **330.**

In one illustrative example, one or more technical solutions are present that overcome a technical problem with using laser sensors to detect speed in vehicle such as aircraft. The frequency shift between the emitted laser light and the received backscatter light is sufficiently small such that detecting a frequency shift by interfering the backscatter light with a reference light may not provide sufficient information to determine speed with the desired level accuracy.

As a result, one or more technical solutions can provide a technical effect providing sufficient information to determine speed for a vehicle such as aircraft. In one illustrative example, two beat frequencies can be determined in which a first beat frequency is determined using the backscatter light and the reference light and a second beat frequency is determined using a time delayed backscatter light and the reference light. The difference between the two beat frequencies can provide sufficient information to determine speed with the desired level accuracy. In other illustrative examples, this difference can be used to determine speed along with at least one of the first beat frequency or the second beat frequency. As a result, improved performance in detecting speed by a laser beam based speed detection system can occur.

The illustration of speed detection environment **200** and the different components in **Figure 2** and **Figure 3** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, one or more laser beams in addition, laser beam **220** can be emitted by laser beam generator **206** at least one of a different frequency, a different phase, or different amplitude in which backscatter light for these additional laser beams are received by receiver **207** in addition to backscatter light **226.** This additional backscatter light can be processed with backscatter light **226** to determine speed **250.**

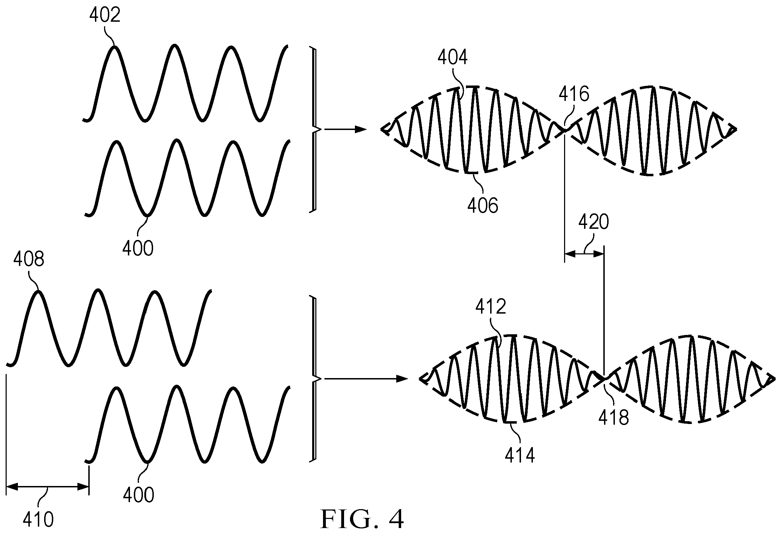

Turning next to **Figure 4,** an illustration of light used to determine the speed of the vehicle is depicted in accordance with an illustrative embodiment. In this illustrative example, reference light **400** and backscatter light **402** are coherent light and each has a frequency. Reference light **400** and backscatter light **402** can have a slightly different frequency from each other such that the interference of the reference light **400** and backscatter light **402** will have a beat frequency.

For example, when reference light **400** and backscatter light **402** is interfered or combined with each other, first interfered light **404** with first beat frequency **406** occurs. In this example, first beat frequency **406** can be measured by measuring the power of first interfered light **404.** First beat frequency **406** can be used to determine the speed of the vehicle.

In this example, additional information can be obtained using reference light **400** and time delayed backscatter light **408.** In this depicted example, time delayed backscatter light **408** is a time delayed version of backscatter light **402.** As depicted, time delayed backscatter light **408** has been shifted by time delay **410** relative to backscatter light **402.**

Reference light **400** and time delayed backscatter light **408** can be interfered or combined to form second interfered light **412** having second beat frequency **414.** In this illustrative example, first beat frequency **406** has a phase difference from second beat frequency **414.** For example, the difference in phase can be measured relative to a reference point in these two interfered lights.

For example, node **416** in first interfered light **404** can be compared to node **418** in second interfered light **412.** In this example, these nodes are reference points where the power is zero. In this example, phase shift **420** is present.

Using first beat frequency **406** or second beat frequency **414** with phase shift **420** to determine speed increases performance in detecting the speed of the vehicle. In this example, both the frequency and time delay difference can be used to increase the accuracy in which speed can be determined.

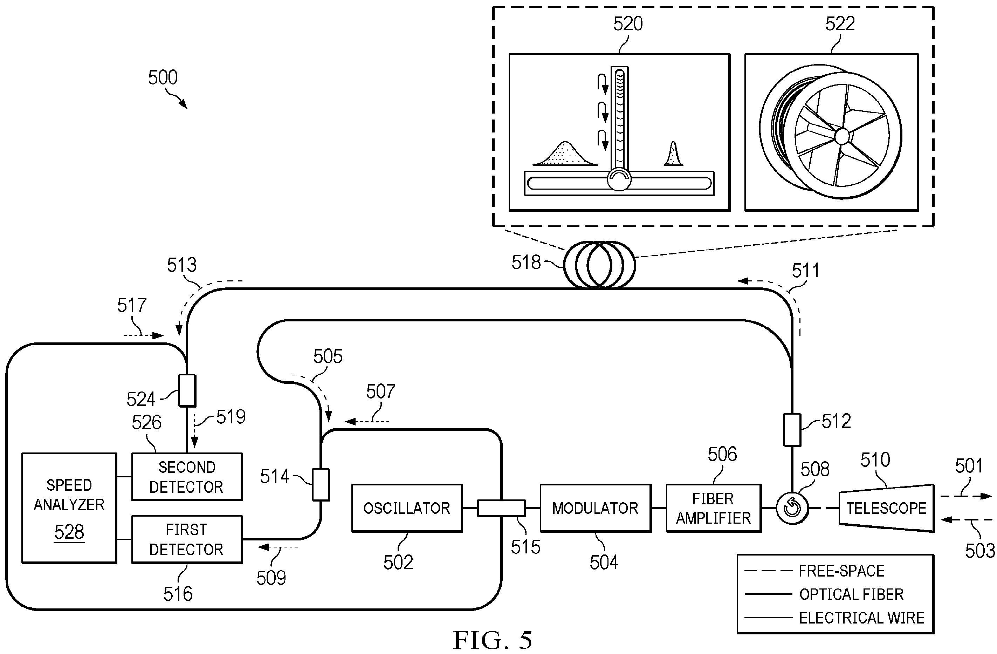

With reference next to **Figure 5,** an illustration of a speed detection system is depicted in accordance with an illustrative embodiment. In this illustrative example, speed detection system **500** is an example of an implementation for speed detection system **204** in **Figure 2.**

As depicted, speed detection system **500** comprises a number of different components. For example, some of the components in speed detection system **500** are oscillator **502**, modulator **504,** and fiber amplifier **506.** These components are examples of components that can be used to implement laser beam generator **206** in **Figure 2.**

In this example, oscillator **502** is a coherent optical oscillator that operates to generate a coherent signal through resonant oscillation without needing an input signal. In this illustrative example, oscillator **502** generates the coherent light that is used to emit laser beam **501.** Laser beam **501** is an outgoing laser beam and can also be referred to as outgoing laser light or a transmitted laser beam.

As depicted, oscillator **502** is connected to splitter **515,** and splitter **515** is connected to modulator **504.** Splitter **515** can be used to split off coherent light to form reference light in these examples.

In this illustrative example, modulator **504** is connected to oscillator **502** and operates to manipulate the property of the coherent light generated by oscillator **502.** For example, modulator **504** can change or manipulate the coherent light to obtain desired property such as intensity, phase, polarization, or other property. Fiber amplifier **506** operates amplify or boost the coherent light generated by oscillator **502** and modulated by modulator **504.** Fiber amplifier **506** is connected to circulator **508.**

In this depicted example, circulator **508** is an optical circulator in the form of a three port device such that light entering a port exits on the next port in circulator **508.** As depicted, the connections between oscillator **502,** modulator **504,** fiber amplifier **506,** and circulator **508** are made using optical fibers.

In this illustrative example, circulator **508** is in communication with telescope **510.** This communication can be through a connection using an optical fiber or through free space. Telescope **510** emits laser beam **501.** In response to the emission or transmission of laser beam **501,** backscatter light **503** can be received by telescope **510.** Backscatter light **503** is received in response to the transmission of laser beam **501** into the atmosphere. Backscatter light **503** results from the scattering of laser beam **501** by various particles in the atmosphere. In this example, telescope **510** also operates as a receiver, such as receiver **207 Figure 2.** Backscatter light **503** travels to circulator **508** which directs backscatter light **503** to splitter **512** which is connected to one of the ports of circulator **508.**

Splitter **512** is an optical splitter that splits backscatter light **503** into first portion **505** and second portion **511.** In this example, each portion is 50% of backscatter light **503.**

As depicted, first portion **505** of backscatter light **503** travels to first interference coupler **514.** First interference coupler **514** can be, for example, a 3DB coupler. First interference coupler **514** interferes first portion **505** of backscatter light **503** with first reference light **507** to generates first interfered light **509** that is sent to first detector **516.** The interference results from first interference coupler **514** combining first portion **505** of backscatter light **503** and first reference light **507** with each other.

Second portion **511** of backscatter light **503** travels to dispersive optical fiber system **518.** Dispersive optical fiber system **518** operates to introduce a time delay to second portion **511** of backscatter light **503.** This time delay forms time delayed backscatter light **513** which is output by dispersive optical fiber system **518.**

Dispersive optical fiber system **518** can take a number of different forms. For example, dispersive optical fiber system **518** can be selected from at least one of chirped fiber Bragg grating **520,** single mode dispersion fiber **522,** or some other suitable type of optical element that can introduce a time delay to second portion **511** of backscatter light **503.** With chirped fiber Bragg grating **520,** the frequency of the light increases, the delay introduced increases.

In this example, dispersive optical fiber system **518** is connected to second interference coupler **524.** As depicted, second interference coupler **524** also as an input connected to splitter **515** and receives second reference light **517.** Second interference coupler **524** interferes time delayed backscatter light **513** with second reference light **517** to form second interfered light **519.** In other words, second interference coupler **524** combines the light with each other. The output of coupler is connected to second detector **526** such that second interfered light **519** is sent to second detector **526.**

In this illustrative example, dispersive optical fiber system **518,** first interference coupler **514,** and second interference coupler **524** are examples of components that can be used in interference system **208 in Figure 2.**

In this illustrative example, first detector **516** and second detector **526** are examples of detectors that can be used to implement detection system **210** in **Figure 2.** These detectors are hardware components that can detect power of light input into the detectors.

In this example, first detector **516** and second detector **526** can detect the power in first interfered light **509** and second interfered light **519.** The power has a frequency that is a beat frequency resulting from interfering the backscatter light with the reference light.

For example, first interfered light **509** has a first beat frequency that occurs from interfering first portion **505** of backscatter light **503** with first reference light **507.** Second interfered light **519** has a second beat frequency that occurs from interfering time delayed backscatter light **513** with second reference light **517.**

In this depicted example, the connections depicted between components such as circulator **508,** splitter **512,** dispersive optical fiber system **518,** first interference coupler **514,** second interference coupler **524,** first detector **516,** and second detector **526** can be optical connections made using optical fibers.

First detector **516** and second detector **526** are connected to speed analyzer **528.** In this illustrative example, these connections can be wired connections. In other illustrative examples, optical connections can be used.

Speed analyzer **528** is an example of speed analyzer **212** in **Figure 2** and can be at least one of a software process, hardware, or a combination thereof that operate to determine speed from the first beat frequency and the second beat frequency. For example, one of both the first beat frequency and the second beat frequency can be used to determine speed. Additionally, a difference such as a phase shift between the first beat frequency and the second beat frequency can also be used to determine speed. These two types of information can be used to determine speed with an increased level performance as compared to current speed analyzers.

In another illustrative example, speed detection system **500** can be an example of an implementation for speed detection system **300** in **Figure 3**. For example, first path **304** can be implemented using first interference coupler **514**. As another illustrative example, second path **306** can be implemented using dispersive optical fiber system **518** and second interference coupler **524**. Further these paths can include optical fibers that connect these components to each other.

The illustration of speed detection system **500** in **Figure 5** is provided as an example of one implementation for speed detection system **204** in **Figure 2**. This illustration is not meant to limit the manner in which speed analyzer **212** can be implemented in other illustrative examples. For example, in another illustrative example, fiber amplifier **506** may be omitted. In yet other illustrative examples, one or more modulators in addition to modulator **504** may be present. In still other illustrative examples, splitter **515** can be located in another location such as after fiber amplifier **506** or after modulator **504**.

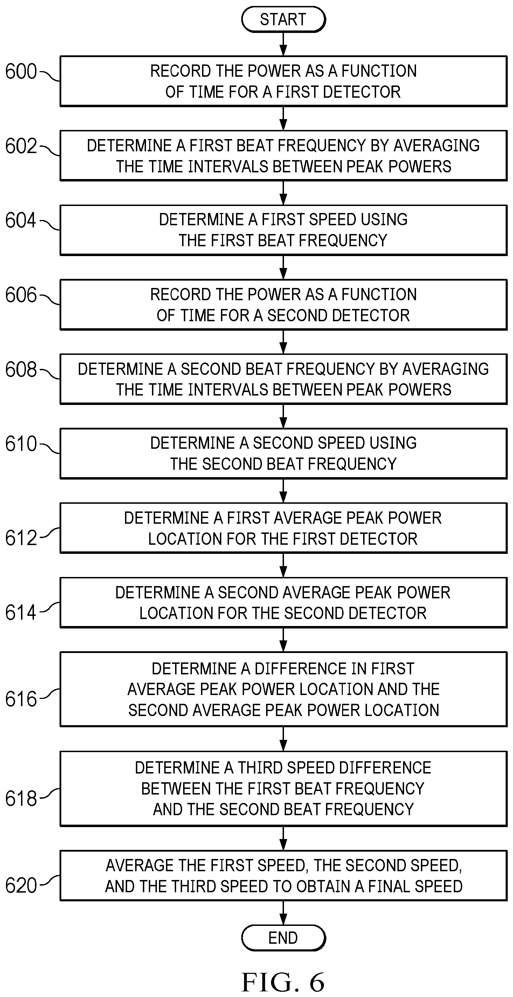

Turning next to **Figure 6,** an illustration of a flowchart of a process for determining speed for a vehicle aircraft is depicted in accordance with an illustrative embodiment. The process in **Figure 6** can be implemented in hardware, software, or both. When implemented in software, the process can take the form of program instructions that is run by one of more processor units located in one or more hardware devices in one or more computer systems. For example, the process can be implemented in speed analyzer **212** in **Figure 2,** speed analyzer **308** in **Figure 3,** and speed analyzer **528** in speed detection system **500** in **Figure 5**. This process can be implemented to increase the accuracy in which the speed of the vehicle can be determined.

The process begins by recording the power as a function of time for a first detector (operation **600**). The process determines a first beat frequency by averaging the time intervals between peak powers (operation **602**). In operation **602,** the beat frequency is fbeat = c/L where c is the speed of light and L is the peak to peak distance. The process determines a first speed using the first beat frequency (operation **604**).

The process records the power as a function of time for a second detector (operation **606**). The process determines a second beat frequency by averaging the time intervals between peak powers (operation **608**). The process determines a second speed using the second beat frequency (operation **610**).

The process determines a first average peak power location for the first detector (operation **612**). The process determines a second average peak power location for the second detector (operation **614**). The process determines a difference in first average peak power location and the second average peak power location (operation **616**). In operation **616,** the difference is the time delay caused by the dispersive element.

The process determines a third speed difference between the first beat frequency and the second beat frequency (operation **618**). In operation **618,** the difference can be a time delay. The speed of a vehicle using the beat frequency can be determined as follows:

$$v= \lambda \ ((fs-f))/2 \qquad\qquad (1)$$

where v is speed, $\lambda$ = free space wavelength of laser beam, f = laser beam frequency, fs is backscattered laser light frequency, fbeat = fs - f = measured beat frequency created by interfering a reference light derived from the laser beam with the backscatter light.

To calculate the speed (v) using the beat shift ($\Delta$t), Equation 1 is used where fs is a function of the measured time delay ($\Delta$t) between power peaks from first detector **516** and the power peaks from second detector **526**.

Using the relationship between fs and $\Delta$t, the value of fs is determined and used to calculate speed using Equation 1.

The process averages the first speed, the second speed, and the third speed to obtain a final speed (operation **620**). The process terminates thereafter.

In another illustrative example, the phase difference can be determined by adding the power versus time curves for the first detector and the second detector together. In other words, the curves of power over time as detected by the first detector and the second detector can be added to each other.

The average standard deviation (STD) can be calculated for the added curves. The adding of power to time curves together can be performed for many different time shifts, and for each one of these time shifts, a standard deviation can the determined.

With this technique, the phases can be considered to be aligned when the standard deviation is at a maximum. Detecting when phases are off by a half cycle can occur when the standard deviation is at a minimum. As a result, knowing a first point where the standard deviation is at a maximum and a second point where the standard deviation is a minimum provides two endpoints. With these two endpoints, the existing phase shift can be determined because the phase shift falls in between these endpoints.

In this example the averaging the three speeds provides a more accurate speed than current techniques. In another illustrative example, the process in **Figure 6** can determine peak frequency by converting data through a fast Fourier transform to find the peak frequency instead of looking at power.

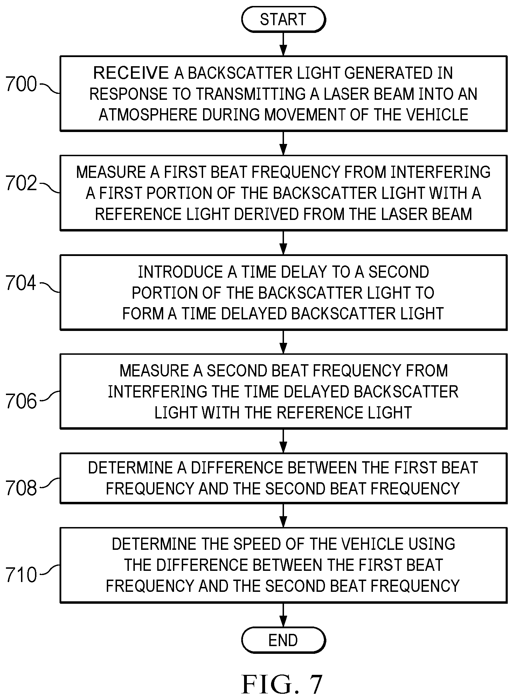

Turning next to **Figure 7,** an illustration of a flowchart of a process for determining speed for a vehicle aircraft is depicted in accordance with an illustrative embodiment. The process in **Figure 7** can be implemented in hardware, software, or both. When implemented in software, the process can take the form of program instructions that is run by one of more processor units located in one or more hardware devices in one or more computer systems. For example, the process can be implemented in speed detection system **204 in Figure 2,** speed detection system **300** in **Figure 3,** and speed detection system **500** in **Figure 5.**

The process begins by receiving a backscatter light generated in response to transmitting a laser beam into an atmosphere during movement of the vehicle (operation **700**). The process measures a first beat frequency from interfering a first portion of the backscatter light with a reference light derived from the laser beam (operation **702**). The process introduces a time delay to a second portion of the backscatter light to form a time delayed backscatter light (operation **704**). The process measures a second beat frequency from interfering the time delayed backscatter light with the reference light (operation **706**). In operation **706,** the second beat frequency is time delayed from the first beat frequency.

The process determines a difference between the first beat frequency and the second beat frequency (operation **708**). The process determines the speed of the vehicle using the difference between the first beat frequency and the second beat frequency (operation **710**). The process terminates thereafter.

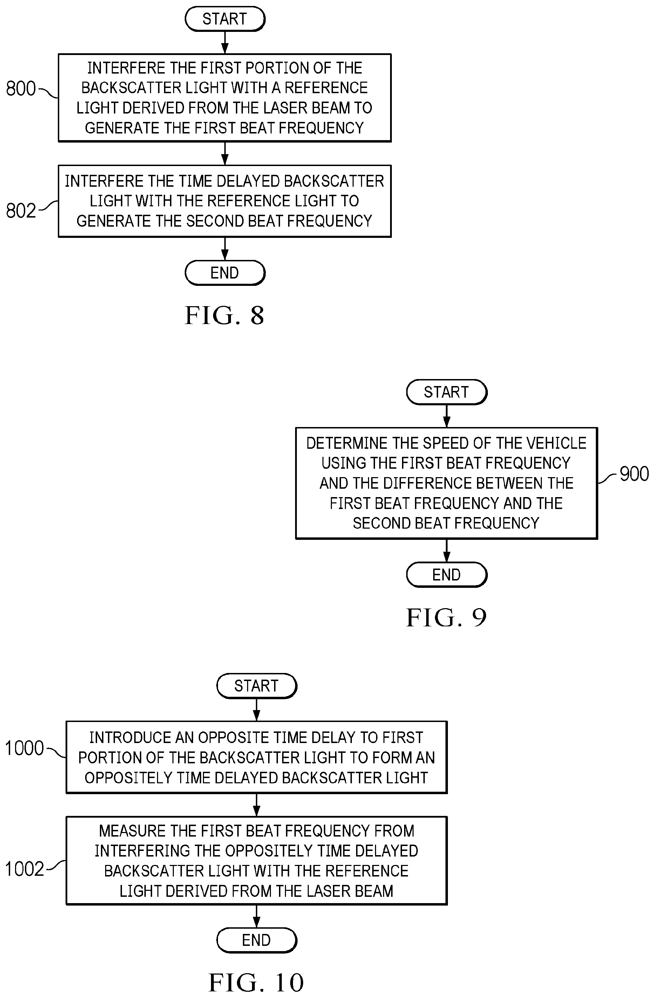

With reference to **Figure 8,** an illustration of a flowchart of a process for interfering a backscatter light with a reference light to generate a beat frequency is depicted in accordance with an illustrative embodiment. The operations in **Figure 8** are examples of additional operations that can be used with the operations in the process in **Figure 7.**

The process begins by interfering the first portion of the backscatter light with a reference light derived from the laser beam to generate the first beat frequency (operation **800**). The process interferes the time delayed backscatter light with the reference light to generate the second beat frequency (operation **802**). The process terminates thereafter.

Turning to **Figure 9,** an illustration of a flowchart of a process for determining a speed of a vehicle using a difference between a beat frequency and a time delayed beat frequency is depicted in accordance with an illustrative embodiment. The process in **Figure 9** is an example of an implementation of operation **710** in **Figure 7.** The process determines the speed of the vehicle using the first beat frequency and the difference between the first beat frequency and the second beat frequency (operation **900**). The process terminates thereafter. In other examples, the speed of the vehicle can be determined in operation **900** using the second beat frequency and the difference between the first beat frequency and the second beat frequency.

With reference to **Figure 10,** an illustration of a flowchart of a process for measuring a beat frequency from interfering an oppositely time delayed backscatter light with a reference light is depicted in accordance with an illustrative embodiment. Operation **1000** in **Figure 10** is an example of an additional operation that can be used with the operations in the process in **Figure 7** and operation **1002** in **Figure 10** is an example of an implementation of operation **702 in Figure 7.**

The process begins by introducing an opposite time delay to first portion of the backscatter light to form an oppositely time delayed backscatter light (operation **1000**). The process measures the first beat frequency from interfering the oppositely time delayed backscatter light with the reference light derived from the laser beam (operation **1002**). The process terminates thereafter.

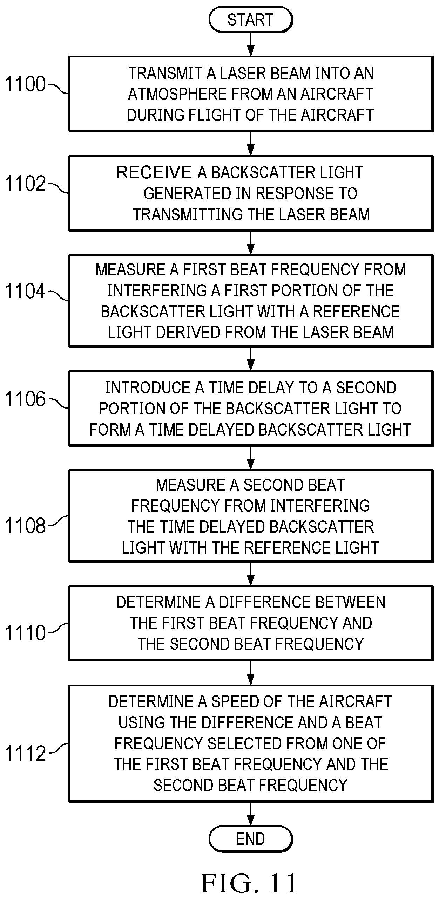

Turning next to **Figure 11,** an illustration of a flowchart of a process for detecting a speed of an aircraft is depicted in accordance with an illustrative embodiment. The process in **Figure 11** can be implemented in hardware, software, or both. When implemented in software, the process can take the form of program instructions that is run by one of more processor units located in one or more hardware devices in one or more computer systems. For example, the process can be implemented in speed detection system **204 in Figure 2,** detection system **300** in **Figure 3,** and speed detection system **500** in **Figure 5.**

The process begins by transmitting a laser beam into an atmosphere from an aircraft during flight of the aircraft (operation **1100**). The process receives a backscatter light generated in response to transmitting the laser beam (operation **1102**). The process measures a first beat frequency from interfering a first portion of the backscatter light with a reference light derived from the laser beam (operation **1104**). The process introduces a time delay to a second portion of the backscatter light to form a time delayed backscatter light (operation **1106**). The process measures a second beat frequency from interfering the time delayed backscatter light with the reference light (operation **1108**). The process determines a difference between the first beat frequency and the second beat frequency (operation **1110**). The process determines a speed of the aircraft using the difference and a beat frequency selected from one of the first beat frequency and the second beat frequency (operation **1112**). The process terminates thereafter. In operation 1112, the beat frequency can be first beat frequency or the second beat frequency.

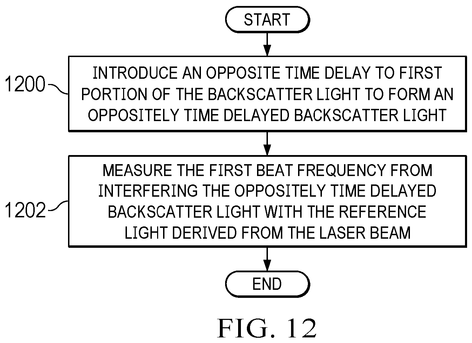

With reference to **Figure 12,** an illustration of a flowchart of a process for measuring a beat frequency from interfering an oppositely time delayed backscatter light with a reference light is depicted in accordance with an illustrative embodiment. Operation **1200** in **Figure 12** is an example of an additional operation that can be used with the operations in the process in **Figure 11** and operation **1202** in **Figure 12** is an example of an implementation of operation **1104** in **Figure 11.**

The process begins by introducing an opposite time delay to first portion of the backscatter light to form an oppositely time delayed backscatter light (operation **1200**). The process measures the first beat frequency from interfering the oppositely time delayed backscatter light with the reference light derived from the laser beam (operation **1202**). The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

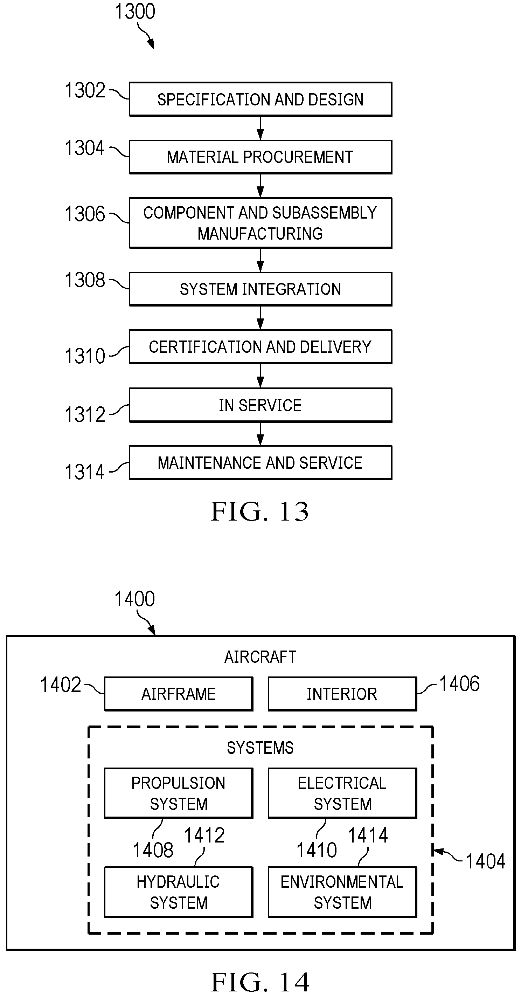

Illustrative embodiments of the disclosure may be described in the context of aircraft manufacturing and service method **1300** as shown in **Figure 13** and aircraft **1400** as shown in **Figure 14.** Turning first to **Figure 13,** an illustration of an aircraft manufacturing and service method is depicted in accordance with an illustrative embodiment. During pre-production, aircraft manufacturing and service method **1300** may include specification and design **1302** of aircraft **1400** in **Figure 14** and material procurement **1304.**

During production, component and subassembly manufacturing **1306** and system integration **1308** of aircraft **1400** in **Figure 14** takes place. Thereafter, aircraft **1400** in **Figure 14** can go through certification and delivery **1310** in order to be placed in service **1312.** While in service **1312** by a customer, aircraft **1400** in **Figure 14** is scheduled for routine maintenance and service **1314,** which may include modification, reconfiguration, refurbishment, and other maintenance or service.

Each of the processes of aircraft manufacturing and service method **1300** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 14,** an illustration of an aircraft is depicted in which an illustrative embodiment may be implemented. In this example, aircraft **1400** is produced by aircraft manufacturing and service method **1300** in **Figure 13** and may include airframe **1402** with plurality of systems **1404** and interior **1406.** Examples of systems **1404** include one or more of propulsion system **1408,** electrical system **1410,** hydraulic system **1412,** and environmental system **1414.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1300** in **Figure 13.**

In one illustrative example, components or subassemblies produced in component and subassembly manufacturing **1306** in **Figure 13** can be fabricated or manufactured in a manner similar to components or subassemblies produced while aircraft **1400** is in service **1312** in **Figure 13.** As yet another example, one or more apparatus embodiments, method embodiments, or a combination thereof can be utilized during production stages, such as component and subassembly manufacturing **1306** and system integration **1308** in **Figure 13.** One or more apparatus embodiments, method embodiments, or a combination thereof may be utilized while aircraft **1400** is in service **1312,** during maintenance and service **1314** in **Figure 13,** or both. The use of a number of the different illustrative embodiments may substantially increase the ability of aircraft **1400** to detect speed during flight at various altitudes with the desired level of performance.

For example, a speed detection system in the illustrative examples can be implemented during system integration **1308.** This speed detection system can also be added to aircraft **1400** during maintenance and service **1314.** This addition can be made during modification, reconfiguration, refurbishment, and other maintenance or service.

Further, the use of the speed detection system can occur during in service **1312** in a manner that provides increased performance in detecting the speed of aircraft **1400** during flight. The accuracy of detecting speed can occur during various flight elevations including mid-level elevations where lower density of particles can be present as compared to other elevations.

Thus, the present disclosure provides a method, apparatus, and system that detects a speed of a vehicle. A backscatter light generated in response to transmitting a laser beam into an atmosphere during movement of the vehicle is received. A first beat frequency from interfering a first portion of the backscatter light with a reference light derived from the laser beam is measured. A time delay is introduced to a second portion of the backscatter light to form a time delayed backscatter light. A second beat frequency from interfering the time delayed backscatter light with the reference light is measured. The second beat frequency is time delayed from the first beat frequency. A difference between the first beat frequency and the second beat frequency is determined. The speed of the vehicle using the difference between the first beat frequency and the second beat frequency is determined.

Additionally, the speed can also be determined using at least one of the first beat frequency or the second beat frequency in addition to using the difference. The additional information can provide improved performance in determining speed in environmental conditions where the amount of backscatter light can be reduced because of lower levels of particles in the atmosphere. In the illustrative examples, this additional information can improve performance as compared to determining speed using a frequency shift of a beat frequency from interfering backscatter light with a reference light using current techniques.

The description has been presented for purposes of illustration and description and is not intended to be exhaustive or limited to the embodiments in the form disclosed. The different illustrative examples describe components that perform actions or operations. A component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as long as these fall within the scope of the appended claims.

## Claims

1. A method for detecting a speed (250, 330) of a vehicle (202), the method comprising:

   receiving (700) a backscatter light (226, 312, 402, 503) generated in response to transmitting a laser beam (132, 220, 310, 501) into an atmosphere (222) during movement of the vehicle (202);
   measuring (702) a first beat frequency (230, 320, 406) from interfering a first portion (228, 314, 505) of the backscatter light (226, 312, 402, 503) with a reference light (224, 318, 400) derived from the laser beam (132, 220, 310, 501);
   introducing (704) a time delay (232, 322, 410) to a second portion (234, 316, 511) of the backscatter light (226, 312, 402, 503) to form a time delayed backscatter light (236, 324, 408, 513);
   measuring (706) a second beat frequency (238, 326, 414) from interfering the time delayed backscatter light (236, 324, 408, 513) with the reference light (224, 318, 400), wherein the second beat frequency (238, 326, 414) is time delayed from the first beat frequency (230, 320, 406) ;
   determining (708) a difference between the first beat frequency (230, 320, 406) and the second beat frequency (238, 326, 414); and
   determining (710) the speed (250, 330) of the vehicle (202) using the difference between the first beat frequency (230, 320, 406) and the second beat frequency (238, 326, 414).

2. The method of claim 1 further comprising:

   interfering (800) the first portion (228, 314, 505) of the backscatter light (226, 312, 402, 503) with the reference light (224, 318, 400) derived from the laser beam (132, 220, 310, 501) to generate the first beat frequency (230, 320, 406); and
   interfering (802) the time delayed backscatter light (236, 324, 408, 513) with the reference light (224, 318, 400) to generate the second beat frequency (238, 326, 414).

3. The method of any one of the preceding claims, wherein determining (710) the speed (250, 330) of the vehicle (202) using the difference between the first beat frequency (230, 320, 406) and the second beat frequency (238, 326, 414) comprises:
determining (900) the speed (250, 330) of the vehicle (202) using the first beat frequency (230, 320, 406) and the difference between the first beat frequency (230, 320, 406) and the second beat frequency (238, 326, 414) .

4. The method of any one of the preceding claims further comprising:

   introducing (1000) an opposite time delay to the first portion (228, 314, 505) of the backscatter light (226, 312, 402, 503) to form an oppositely time delayed backscatter light;
   wherein measuring the first beat frequency (230, 320, 406) from interfering the first portion (228, 314, 505) of the backscatter light (226, 312, 402, 503) with the reference light (224, 318, 400) derived from the laser beam (132, 220, 310, 501) comprises:
   measuring (1002) the first beat frequency (230, 320, 406) from interfering the oppositely time delayed backscatter light with the reference light (224, 318, 400) derived from the laser beam (132, 220, 310, 501).

5. The method of any one of the preceding claims, wherein the time delay (232, 322, 410) is dependent on a frequency of the backscatter light (226, 312, 402, 503).

6. The method of any one of the preceding claims, wherein the difference is selected from one of a phase difference and a time difference.

7. The method of any one of the preceding claims, wherein the first beat frequency (230, 320, 406) is for a first power signal (240) and the second beat frequency (238, 326, 414) is for a second power signal (242).

8. The method of any one of the preceding claims, wherein the time delay (232, 322, 410) is introduced using at least one of a chirped fiber Bragg grating (520) or a single mode dispersion fiber (522).

9. The method of any one of the preceding claims, wherein the vehicle (202) is selected from one of a mobile platform, an aircraft (205, 1400), a commercial airplane, a tilt-rotor aircraft, a tilt wing aircraft, a vertical takeoff and landing aircraft, an electrical vertical takeoff and landing vehicle (202), a personal air vehicle (202), a surface ship, a tank, a personnel carrier, a train, a spacecraft, a submarine, a bus, an automobile, and a motorcycle.

10. A speed detection system (130, 204, 300, 500) comprising:

    a laser beam generator (206, 302) configured to emit a laser beam (132, 220, 310, 501) into an atmosphere (222) from a vehicle (202);
    an interference system (208) configured to interfere a first portion (228, 314, 505) of a backscatter light (226, 312, 402, 503) received with a reference light (224, 318, 400) to form a first beat frequency (230, 320, 406), introduce a time delay (232, 322, 410) to a second portion (234, 316, 511) of the backscatter light (226, 312, 402, 503) to form a time delayed backscatter light (236, 324, 408, 513), and interfere the time delayed backscatter light (236, 324, 408, 513) with the reference light (224, 318, 400) to form a second beat frequency (238, 326, 414), wherein the backscatter light (226, 312, 402, 503) is received in response to the laser beam (132, 220, 310, 501) being emitted into the atmosphere (222) and the reference light (224, 318, 400) is derived from the laser beam (132, 220, 310, 501);
    a detection system (210) configured to measure a first beat frequency (230, 320, 406) from frequency from interfering the first portion (228, 314, 505) of the backscatter light (226, 312, 402, 503) with the reference light (224, 318, 400) and measure the second beat frequency (238, 326, 414) from interfering the time delayed backscatter light (236, 324, 408, 513) with the reference light (224, 318, 400); and
    a speed analyzer (212, 308, 528) configured to determine a speed (250, 330) for the vehicle (202) using the first beat frequency (230, 320, 406) and a difference between the first beat frequency (230, 320, 406) and the second beat frequency (238, 326, 414).

11. The speed detection system (130, 204, 300, 500) of claim 10, wherein the interference system (208) comprises:

    a first interference coupler (514) having an output connected to the detection system (210), wherein the first interference coupler (514) interferes the first portion (228, 314, 505) of a backscatter light (226, 312, 402, 503) received with the reference light (224, 318, 400);
a time delay system having an input and an output, wherein the input receives the second portion (234, 316, 511) of the backscatter light (226, 312, 402, 503) and wherein the time delay system introduces the time delay (232, 322, 410) to the second portion (234, 316, 511) of the backscatter light (226, 312, 402, 503); and
a second interference coupler (524) having an input connected to the output of the time delay system having an output connected to the detection system (210), wherein the second interference coupler (524) interferes the time delayed backscatter light (236, 324, 408, 513) with the reference light (224, 318, 400).

12. The speed detection system (130, 204, 300, 500) of any one of claims 10-11, wherein the interference system (208) is configured to:

introduce an opposite time delay to a first portion (228, 314, 505) of the backscatter light (226, 312, 402, 503) to form an oppositely time delayed backscatter light;
wherein in measuring the first beat frequency (230, 320, 406) from interfering the first portion (228, 314, 505) of the backscatter light (226, 312, 402, 503) with the reference light (224, 318, 400) derived from the laser beam (132, 220, 310, 501), the detection system (210) is configured to:
measure the first beat frequency (230, 320, 406) from interfering the oppositely time delayed backscatter light with the reference light (224, 318, 400) derived from the laser beam (132, 220, 310, 501).

13. The speed detection system (130, 204, 300, 500) of claim 11, wherein the time delay system is selected at least one of a chirped fiber Bragg grating (520) or a single mode dispersion fiber (522).

14. The speed detection system (130, 204, 300, 500) of claim 11, wherein the difference is selected from one of a phase difference and a time difference.

15. The speed detection system (130, 204, 300, 500) of any one of claims 10-14, wherein the vehicle (202) is selected from one of one of a mobile platform, an aircraft (205, 1400), a commercial airplane, a tilt-rotor aircraft, a tilt wing aircraft, a vertical takeoff and landing aircraft, an electrical vertical takeoff and landing vehicle (202), a personal air vehicle (202), a surface ship, a tank, a personnel carrier, a train, a spacecraft, a submarine, a bus, and an automobile and motorcycle.

**Patentansprüche**

1. Verfahren zum Erfassen einer Geschwindigkeit (250, 330) eines Fahrzeugs (202), wobei das Verfahren aufweist:

Empfangen (700) von Rückstreulicht (226, 312, 402, 503), das in Reaktion auf ein Senden eines Laserstrahls (132, 220, 310, 501) in eine Atmosphäre (222) während einer Bewegung des Fahrzeugs (202) erzeugt wird;
Messen (702) einer ersten Schwebungsfrequenz (230, 320, 406) aus einer Interferenz eines ersten Teils (228, 314, 505) des Rückstreulichts (226, 312, 402, 503) mit einem Referenzlicht (224, 318, 400), das aus dem Laserstrahl (132, 220, 310, 501) abgeleitet wird;
Einführen (704) einer Zeitverzögerung (232, 322, 410) in einen zweiten Teil (234, 316, 511) des Rückstreulichts (226, 312, 402, 503), um ein zeitverzögertes Rückstreulicht (236, 324, 408, 513) zu bilden;
Messen (706) einer zweiten Schwebungsfrequenz (238, 326, 414) aus einer Interferenz des zeitverzögerten Rückstreulichts (236, 324, 408, 513) mit dem Referenzlicht (224, 318, 400), wobei die zweite Schwebungsfrequenz (238, 326, 414) gegenüber der ersten Schwebungsfrequenz (230, 320, 406) zeitverzögert ist;
Bestimmen (708) einer Differenz zwischen der ersten Schwebungsfrequenz (230, 320, 406) und der zweiten Schwebungsfrequenz (238, 326, 414); und
Bestimmen (710) der Geschwindigkeit (250, 330) des Fahrzeugs (202) unter Verwendung der Differenz zwischen der ersten Schwebungsfrequenz (230, 320, 406) und der zweiten Schwebungsfrequenz (238, 326, 414).

2. Verfahren nach Anspruch 1, das ferner aufweist:

Interferieren (800) des ersten Teils (228, 314, 505) des Rückstreulichts (226, 312, 402, 503) mit dem Referenzlicht (224, 318, 400), das aus dem Laserstrahl (132, 220, 310, 501) abgeleitet wird, um die erste Schwebungsfrequenz (230, 320, 406) zu erzeugen; und

Interferieren (802) des zeitverzögerten Rückstreulichts (236, 324, 408, 513) mit dem Referenzlicht (224, 318, 400), um die zweite Schwebungsfrequenz (238, 326, 414) zu erzeugen.

3. Verfahren nach einem der vorhergehenden Ansprüche, wobei ein Bestimmen (710) der Geschwindigkeit (250, 330) des Fahrzeugs (202) unter Verwendung der Differenz zwischen der ersten Schwebungsfrequenz (230, 320, 406) und der zweiten Schwebungsfrequenz (238, 326, 414) aufweist:
Bestimmen (900) der Geschwindigkeit (250, 330) des Fahrzeugs (202) unter Verwendung der ersten Schwebungsfrequenz (230, 320, 406) und der Differenz zwischen der ersten Schwebungsfrequenz (230, 320, 406) und der zweiten Schwebungsfrequenz (238, 326, 414).

4. Verfahren nach einem der vorhergehenden Ansprüche, das ferner aufweist:

Einführen (1000) einer entgegengesetzten Zeitverzögerung in den ersten Teil (228, 314, 505) des Rückstreulichts (226, 312, 402, 503), um ein entgegengesetzt zeitverzögertes Rückstreulicht zu bilden;
wobei ein Messen der ersten Schwebungsfrequenz (230, 320, 406) aus einem Interferieren des ersten Teils (228, 314, 505) des Rückstreulichts (226, 312, 402, 503) mit dem Referenzlicht (224, 318, 400), das aus dem Laserstrahl (132, 220, 310, 501) abgeleitet wird, aufweist:
Messen (1002) der ersten Schwebungsfrequenz (230, 320, 406) aus einem Interferieren des entgegengesetzt zeitverzögerten Rückstreulichts mit dem Referenzlicht (224, 318, 400), das aus dem Laserstrahl (132, 220, 310, 501) abgeleitet wird.

5. Verfahren nach einem der vorhergehenden Ansprüche, wobei die Zeitverzögerung (232, 322, 410) von einer Frequenz des Rückstreulichts (226, 312, 402, 503) abhängig ist.

6. Verfahren nach einem der vorhergehenden Ansprüche, wobei die Differenz aus einer Phasendifferenz oder einer Zeitdifferenz ausgewählt wird.

7. Verfahren nach einem der vorhergehenden Ansprüche, wobei die erste Schwebungsfrequenz (230, 320, 406) einem ersten Leistungssignal (240) dient und wobei die zweite Schwebungsfrequenz (238, 326, 414) einem zweiten Leistungssignal (242) dient.

8. Verfahren nach einem der vorhergehenden Ansprüche, wobei die Zeitverzögerung (232, 322, 410) unter Verwendung eines gechirpten Faser-Bragg-Gitters (520) und/oder einer Einzelmodus-Dispersionsfaser (522) eingeführt wird.

9. Verfahren nach einem der vorhergehenden Ansprüche, wobei das Fahrzeug (202) ausgewählt wird aus: einer mobilen Plattform, einem Luftfahrzeug (205, 1400), einem kommerziellen Luftfahrzeug, einem Kipprotorluftfahrzeug, einem Kippflügelluftfahrzeug, einem vertikal startenden und landenden Luftfahrzeug, einem elektrischen vertikal startenden und landenden Fahrzeug (202), einem persönlichen Luftfahrzeug (202), einem Überwasserschiff, einem Panzer, einem Personentransporter, einem Zug, einem Raumfahrzeug, einem U-Boot, einem Automobil oder einem Motorrad.

10. Geschwindigkeitserfassungssystem (130, 204, 300, 500), das aufweist:

einen Laserstrahlgenerator (206, 302), der eingerichtet ist, einen Laserstrahl (132, 220, 310, 501) in einer Atmosphäre (222) von einem Fahrzeug (202) aus zu emittieren;
ein Interferenzsystem (208), das eingerichtet ist, einen ersten Teil (228, 314, 505) eines empfangenen Rückstreulichts (226, 312, 402, 503) mit einem Referenzlicht (224, 318, 400) zu interferieren, um eine erste Schwebungsfrequenz (230, 320, 406) zu bilden, eine Zeitverzögerung (232, 322, 410) in einen zweiten Teil (234, 316, 511) des Rückstreulichts (226, 312, 402, 503) einzufügen, um ein zeitverzögertes Rückstreulicht (236, 324, 408, 513) zu bilden, und das zeitverzögerte Rückstreulicht (236, 324, 408, 513) mit dem Referenzlicht (224, 318, 400) zu interferieren, um eine zweite Schwebungsfrequenz (238, 326, 414) zu bilden, wobei das Rückstreulicht (226, 312, 402, 503) in Reaktion auf den Laserstrahl (132, 220, 310, 501) empfangen wird, der in die Atmosphäre (222) emittiert wird, und wobei das Referenzlicht (224, 318, 400) aus dem Laserstrahl (132, 220, 310, 501) abgeleitet wird;
ein Erfassungssystem (210), das eingerichtet ist, eine erste Schwebungsfrequenz (230, 320, 406) aus einer Frequenz aus einem Interferieren des ersten Teils (228, 314, 505) des Rückstreulichts (226, 312, 402, 503) mit dem Referenzlicht (224, 318, 400) zu messen und die zweite Schwebungsfrequenz (238, 326, 414) aus einem Interferieren des zeitverzögerten Rückstreulichts (236, 324, 408, 513) mit dem Referenzlicht (224, 318, 400) zu messen; und

eine Geschwindigkeitsanalyseeinrichtung (212, 308, 528), die eingerichtet ist, eine Geschwindigkeit (250, 330) für das Fahrzeug (202) unter Verwendung der ersten Schwebungsfrequenz (230, 320, 406) und einer Differenz zwischen der ersten Schwebungsfrequenz (230, 320, 406) und der zweiten Schwebungsfrequenz (238, 326, 414) zu bestimmen.

11. Geschwindigkeitserfassungssystem (130, 204, 300, 500) nach Anspruch 10, wobei das Interferenzsystem (208) aufweist:

einen ersten Interferenzkoppler (514), der einen Ausgang aufweist, der mit dem Erfassungssystem (210) verbunden ist, wobei der erste Interferenzkoppler (514) den ersten Teil (228, 314, 505) eines empfangenen Rückstreulichts (226, 312, 402, 503) mit dem Referenzlicht (224, 318, 400) interferiert;

ein Zeitverzögerungssystem, das einen Eingang und einen Ausgang aufweist, wobei der Eingang den zweiten Teil (234, 316, 511) des Rückstreulichts (226, 312, 402, 503) empfängt und wobei das Zeitverzögerungssystem die Zeitverzögerung (232, 322, 410) in den zweiten Teil (234, 316, 511) des Rückstreulichts (226, 312, 402, 503) einführt; und

einen zweiten Interferenzkoppler (524), der einen Eingang aufweist, der mit dem Ausgang des Zeitverzögerungssystems verbunden ist, das einen Ausgang aufweist, der mit dem Erfassungssystem (210) verbunden ist, wobei der zweite Interferenzkoppler (524) das zeitverzögerte Rückstreulicht (236, 324, 408, 513) mit dem Referenzlicht (224, 318, 400) interferiert.

12. Geschwindigkeitserfassungssystem (130, 204, 300, 500) nach einem der Ansprüche 10-11, wobei das Interferenzsystem (208) eingerichtet ist:

eine entgegengesetzte Zeitverzögerung in einen ersten Teil (228, 314, 505) des Rückstreulichts (226, 312, 402, 503) einzuführen, um ein entgegengesetzt zeitverzögertes Rückstreulicht zu bilden;

wobei beim Messen der ersten Schwebungsfrequenz (230, 320, 406) aus einem Interferieren des ersten Teils (228, 314, 505) des Rückstreulichts (226, 312, 402, 503) mit dem Referenzlicht (224, 318, 400), das aus dem Laserstrahl (132, 220, 310, 501) abgeleitet wird, das Erfassungssystem (210) eingerichtet ist:

die erste Schwebungsfrequenz (230, 320, 406) aus einem Interferieren des entgegengesetzt zeitverzögerten Rückstreulichts mit dem Referenzlicht (224, 318, 400) zu messen, das aus dem Laserstrahl (132, 220, 310, 501) abgeleitet wird.

13. Geschwindigkeitserfassungssystem (130, 204, 300, 500) nach Anspruch 11, wobei das Zeitverzögerungssystem aus einem gechirpten Faser-Bragg-Gitter (520) und/oder einer Einzelmodus-Dispersionsfaser (522) ausgewählt ist.

14. Geschwindigkeitserfassungssystem (130, 204, 300, 500) nach Anspruch 11, wobei die Differenz aus einer Phasendifferenz oder einer Zeitdifferenz ausgewählt wird.

15. Geschwindigkeitserfassungssystem (130, 204, 300, 500) nach einem der Ansprüche 10-14, wobei das Fahrzeug (202) ausgewählt wird aus: einer mobilen Plattform, einem Luftfahrzeug (205, 1400), einem kommerziellen Luftfahrzeug, einem Kipprotorluftfahrzeug, einem Kippflügelluftfahrzeug, einem vertikal startenden und landenden Luftfahrzeug, einem elektrischen vertikal startenden und landenden Fahrzeug (202), einem persönlichen Luftfahrzeug (202), einem Überwasserschiff, einem Panzer, einem Personentransporter, einem Zug, einem Raumfahrzeug, einem U-Boot, einem Automobil oder einem Motorrad.

## Revendications

1. Procédé de détection de la vitesse (250, 330) d'un véhicule (202), le procédé consistant à :

recevoir (700) une lumière rétrodiffusée (226, 312, 402, 503) générée en réponse à la transmission d'un faisceau laser (132, 220, 310, 501) dans une atmosphère (222) pendant le déplacement du véhicule (202) ;

mesurer (702) une première fréquence de battement (230, 320, 406) résultant de l'interférence d'une première partie (228, 314, 505) de la lumière rétrodiffusée (226, 312, 402, 503) avec une lumière de référence (224, 318, 400) dérivée du faisceau laser (132, 220, 310, 501) ;

introduire (704) un retard temporel (232, 322, 410) dans une deuxième partie (234, 316, 511) de la lumière rétrodiffusée (226, 312, 402, 503) pour former une lumière rétrodiffusée à retard temporel (236, 324, 408, 513) ;
mesurer (706) une deuxième fréquence de battement (238, 326, 414) résultant de l'interférence de la lumière rétrodiffusée à retard temporel (236, 324, 408, 513) avec la lumière de référence (224, 318, 400), la deuxième fréquence de battement (238, 326, 414) étant retardée par rapport à la première fréquence de battement (230, 320, 406) ;
déterminer (708) une différence entre la première fréquence de battement (230, 320, 406) et la deuxième fréquence de battement (238, 326, 414) ; et
déterminer (710) la vitesse (250, 330) du véhicule (202) à l'aide de la différence entre la première fréquence de battement (230, 320, 406) et la deuxième fréquence de battement (238, 326, 414).

2. Procédé selon la revendication 1, consistant en outre à :

faire interférer (800) la première partie (228, 314, 505) de la lumière rétrodiffusée (226, 312, 402, 503) avec la lumière de référence (224, 318, 400) dérivée du faisceau laser (132, 220, 310, 501) pour générer la première fréquence de battement (230, 320, 406) ; et
faire interférer (802) la lumière rétrodiffusée à retard temporel (236, 324, 408, 513) avec la lumière de référence (224, 318, 400) pour générer la deuxième fréquence de battement (238, 326, 414).

3. Procédé selon l'une des revendications précédentes,
dans lequel la détermination (710) de la vitesse (250, 330) du véhicule (202) à l'aide de la différence entre la première fréquence de battement (230, 320, 406) et la deuxième fréquence de battement (238, 326, 414) consiste à :
déterminer (900) la vitesse (250, 330) du véhicule (202) à l'aide de la première fréquence de battement (230, 320, 406) et de la différence entre la première fréquence de battement (230, 320, 406) et la deuxième fréquence de battement (238, 326, 414).

4. Procédé selon l'une des revendications précédentes, consistant en outre à :

introduire (1000) un retard temporel opposé dans la première partie (228, 314, 505) de la lumière rétrodiffusée (226, 312, 402, 503) pour former une lumière rétrodiffusée à retard temporel opposé ;
dans lequel la mesure de la première fréquence de battement (230, 320, 406) résultant de l'interférence de la première partie (228, 314, 505) de la lumière rétrodiffusée (226, 312, 402, 503) avec la lumière de référence (224, 318, 400) dérivée du faisceau laser (132, 220, 310, 501) consiste à :
mesurer (1002) la première fréquence de battement (230, 320, 406) résultant de l'interférence de la lumière rétrodiffusée à retard temporel opposé avec la lumière de référence (224, 318, 400) dérivée du faisceau laser (132, 220, 310, 501).

5. Procédé selon l'une des revendications précédentes,
dans lequel le retard temporel (232, 322, 410) dépend d'une fréquence de la lumière rétrodiffusée (226, 312, 402, 503).

6. Procédé selon l'une des revendications précédentes,
dans lequel la différence est choisie parmi une différence de phase et une différence de temps.

7. Procédé selon l'une des revendications précédentes,
dans lequel la première fréquence de battement (230, 320, 406) s'applique à un premier signal de puissance (240) et la deuxième fréquence de battement (238, 326, 414) s'applique à un deuxième signal de puissance (242).

8. Procédé selon l'une des revendications précédentes,
dans lequel le retard temporel (232, 322, 410) est introduit à l'aide d'au moins un réseau de Bragg à fibre chirpée (520) ou d'une fibre à dispersion monomode (522).

9. Procédé selon l'une des revendications précédentes,
dans lequel le véhicule (202) est choisi parmi une plate-forme mobile, un aéronef (205, 1400), un avion commercial, un aéronef à rotors basculants, un aéronef à aile basculante, un aéronef à décollage et atterrissage verticaux, un véhicule électrique à décollage et atterrissage verticaux (202), un véhicule aérien personnel (202), un navire de surface, un char d'assaut, un véhicule de transport personnel, un train, un engin spatial, un sous-marin, un autobus, une automobile et une motocyclette.

**10.** Système de détection de vitesse (130, 204, 300, 500), comprenant :

un générateur de faisceau laser (206, 302) configuré pour émettre un faisceau laser (132, 220, 310, 501) dans une atmosphère (222) à partir d'un véhicule (202) ;

un système d'interférence (208) configuré pour faire interférer une première partie (228, 314, 505) d'une lumière rétrodiffusée (226, 312, 402, 503) reçue avec une lumière de référence (224, 318, 400) pour former une première fréquence de battement (230, 320, 406), introduire un retard temporel (232, 322, 410) dans une deuxième partie (234, 316, 511) de la lumière rétrodiffusée (226, 312, 402, 503) pour former une lumière rétrodiffusée à retard temporel (236, 324, 408, 513), et faire interférer la lumière rétrodiffusée à retard temporel (236, 324, 408, 513) avec la lumière de référence (224, 318, 400) pour former une deuxième fréquence de battement (238, 326, 414), la lumière rétrodiffusée (226, 312, 402, 503) étant reçue en réponse à l'émission du faisceau laser (132, 220, 310, 501) dans l'atmosphère (222) et la lumière de référence (224, 318, 400) étant dérivée du faisceau laser (132, 220, 310, 501) ;

un système de détection (210) configuré pour mesurer une première fréquence de battement (230, 320, 406) à partir de la fréquence résultant de l'interférence de la première partie (228, 314, 505) de la lumière rétrodiffusée (226, 312, 402, 503) avec la lumière de référence (224, 318, 400) et pour mesurer la deuxième fréquence de battement (238, 326, 414) résultant de l'interférence de la lumière rétrodiffusée à retard temporel (236, 324, 408, 513) avec la lumière de référence (224, 318, 400) ; et

un analyseur de vitesse (212, 308, 528) configuré pour déterminer la vitesse (250, 330) du véhicule (202) à l'aide de la première fréquence de battement (230, 320, 406) et d'une différence entre la première fréquence de battement (230, 320, 406) et la deuxième fréquence de battement (238, 326, 414).

**11.** Système de détection de vitesse (130, 204, 300, 500) selon la revendication 10, dans lequel le système d'interférence (208) comprend :

un premier coupleur d'interférence (514) dont la sortie est connectée au système de détection (210), le premier coupleur d'interférence (514) faisant interférer la première partie (228, 314, 505) d'une lumière rétrodiffusée (226, 312, 402, 503) reçue avec la lumière de référence (224, 318, 400) ;

un système de retardement ayant une entrée et une sortie, l'entrée recevant la deuxième partie (234, 316, 511) de la lumière rétrodiffusée (226, 312, 402, 503), et le système retardement introduisant le retard temporel (232, 322, 410) dans la deuxième partie (234, 316, 511) de la lumière rétrodiffusée (226, 312, 402, 503) ; et

un deuxième coupleur d'interférence (524) dont l'entrée est connectée à la sortie du système de retardement et dont la sortie est connectée au système de détection (210),

dans lequel le deuxième coupleur d'interférence (524) fait interférer la lumière rétrodiffusée à retard temporel (236, 324, 408, 513) avec la lumière de référence (224, 318, 400).

**12.** Système de détection de vitesse (130, 204, 300, 500) selon l'une des revendications 10 à 11, dans lequel le système d'interférence (208) est configuré pour :

introduire un retard temporel opposé dans une première partie (228, 314, 505) de la lumière rétrodiffusée (226, 312, 402, 503) pour former une lumière rétrodiffusée à retard temporel opposé ;

dans lequel, lors de la mesure de la première fréquence de battement (230, 320, 406) résultant de l'interférence de la première partie (228, 314, 505) de la lumière rétrodiffusée (226, 312, 402, 503) avec la lumière de référence (224, 318, 400) dérivée du faisceau laser (132, 220, 310, 501), le système de détection (210) est configuré pour :

mesurer la première fréquence de battement (230, 320, 406) résultant de l'interférence de la lumière rétrodiffusée à retard temporel opposé avec la lumière de référence (224, 318, 400) dérivée du faisceau laser (132, 220, 310, 501).

**13.** Système de détection de vitesse (130, 204, 300, 500) selon la revendication 11, dans lequel le système de retardement est choisi au moins parmi un réseau de Bragg à fibre chirpée (520) ou une fibre à dispersion monomode (522).

**14.** Système de détection de vitesse (130, 204, 300, 500) selon la revendication 11, dans lequel la différence est choisie parmi une différence de phase et une différence de temps.

**15.** Système de détection de vitesse (130, 204, 300, 500) selon l'une des revendications 10 à 14, dans lequel le véhicule (202) est choisi parmi une plate-forme mobile, un aéronef (205, 1400), un avion commercial, un aéronef à rotors basculants, un aéronef à aile basculante, un aéronef à décollage et atterrissage verticaux, un véhicule électrique à décollage et atterrissage verticaux (202), un véhicule aérien personnel (202), un navire de surface, un char d'assaut, un véhicule de transport personnel, un train, un engin spatial, un sous-marin, un autobus, et une automobile et une motocyclette.

FIG. 1

EP 4 369 001 B1

FIG. 2

EP 4 369 001 B1

FIG. 3

FIG. 4

EP 4 369 001 B1

FIG. 5

EP 4 369 001 B1

START

600 — RECORD THE POWER AS A FUNCTION
OF TIME FOR A FIRST DETECTOR

602 — DETERMINE A FIRST BEAT FREQUENCY BY AVERAGING
THE TIME INTERVALS BETWEEN PEAK POWERS

604 — DETERMINE A FIRST SPEED USING
THE FIRST BEAT FREQUENCY

606 — RECORD THE POWER AS A FUNCTION
OF TIME FOR A SECOND DETECTOR

608 — DETERMINE A SECOND BEAT FREQUENCY BY AVERAGING
THE TIME INTERVALS BETWEEN PEAK POWERS

610 — DETERMINE A SECOND SPEED USING
THE SECOND BEAT FREQUENCY

612 — DETERMINE A FIRST AVERAGE PEAK POWER
LOCATION FOR THE FIRST DETECTOR

614 — DETERMINE A SECOND AVERAGE PEAK POWER
LOCATION FOR THE SECOND DETECTOR

616 — DETERMINE A DIFFERENCE IN FIRST
AVERAGE PEAK POWER LOCATION AND THE
SECOND AVERAGE PEAK POWER LOCATION

618 — DETERMINE A THIRD SPEED DIFFERENCE
BETWEEN THE FIRST BEAT FREQUENCY
AND THE SECOND BEAT FREQUENCY

620 — AVERAGE THE FIRST SPEED, THE SECOND SPEED,
AND THE THIRD SPEED TO OBTAIN A FINAL SPEED

END

FIG. 6

START

700 — RECEIVE A BACKSCATTER LIGHT GENERATED IN RESPONSE TO TRANSMITTING A LASER BEAM INTO AN ATMOSPHERE DURING MOVEMENT OF THE VEHICLE

702 — MEASURE A FIRST BEAT FREQUENCY FROM INTERFERING A FIRST PORTION OF THE BACKSCATTER LIGHT WITH A REFERENCE LIGHT DERIVED FROM THE LASER BEAM

704 — INTRODUCE A TIME DELAY TO A SECOND PORTION OF THE BACKSCATTER LIGHT TO FORM A TIME DELAYED BACKSCATTER LIGHT

706 — MEASURE A SECOND BEAT FREQUENCY FROM INTERFERING THE TIME DELAYED BACKSCATTER LIGHT WITH THE REFERENCE LIGHT

708 — DETERMINE A DIFFERENCE BETWEEN THE FIRST BEAT FREQUENCY AND THE SECOND BEAT FREQUENCY

710 — DETERMINE THE SPEED OF THE VEHICLE USING THE DIFFERENCE BETWEEN THE FIRST BEAT FREQUENCY AND THE SECOND BEAT FREQUENCY

END

FIG. 7

START

800 — INTERFERE THE FIRST PORTION OF THE BACKSCATTER LIGHT WITH A REFERENCE LIGHT DERIVED FROM THE LASER BEAM TO GENERATE THE FIRST BEAT FREQUENCY

802 — INTERFERE THE TIME DELAYED BACKSCATTER LIGHT WITH THE REFERENCE LIGHT TO GENERATE THE SECOND BEAT FREQUENCY

END

FIG. 8

START

DETERMINE THE SPEED OF THE VEHICLE USING THE FIRST BEAT FREQUENCY AND THE DIFFERENCE BETWEEN THE FIRST BEAT FREQUENCY AND THE SECOND BEAT FREQUENCY — 900

END

FIG. 9

START

1000 — INTRODUCE AN OPPOSITE TIME DELAY TO FIRST PORTION OF THE BACKSCATTER LIGHT TO FORM AN OPPOSITELY TIME DELAYED BACKSCATTER LIGHT

1002 — MEASURE THE FIRST BEAT FREQUENCY FROM INTERFERING THE OPPOSITELY TIME DELAYED BACKSCATTER LIGHT WITH THE REFERENCE LIGHT DERIVED FROM THE LASER BEAM

END

FIG. 10

START

1100 — TRANSMIT A LASER BEAM INTO AN ATMOSPHERE FROM AN AIRCRAFT DURING FLIGHT OF THE AIRCRAFT

1102 — RECEIVE A BACKSCATTER LIGHT GENERATED IN RESPONSE TO TRANSMITTING THE LASER BEAM

1104 — MEASURE A FIRST BEAT FREQUENCY FROM INTERFERING A FIRST PORTION OF THE BACKSCATTER LIGHT WITH A REFERENCE LIGHT DERIVED FROM THE LASER BEAM

1106 — INTRODUCE A TIME DELAY TO A SECOND PORTION OF THE BACKSCATTER LIGHT TO FORM A TIME DELAYED BACKSCATTER LIGHT

1108 — MEASURE A SECOND BEAT FREQUENCY FROM INTERFERING THE TIME DELAYED BACKSCATTER LIGHT WITH THE REFERENCE LIGHT

1110 — DETERMINE A DIFFERENCE BETWEEN THE FIRST BEAT FREQUENCY AND THE SECOND BEAT FREQUENCY

1112 — DETERMINE A SPEED OF THE AIRCRAFT USING THE DIFFERENCE AND A BEAT FREQUENCY SELECTED FROM ONE OF THE FIRST BEAT FREQUENCY AND THE SECOND BEAT FREQUENCY

END

FIG. 11

START

1200 — INTRODUCE AN OPPOSITE TIME DELAY TO FIRST PORTION OF THE BACKSCATTER LIGHT TO FORM AN OPPOSITELY TIME DELAYED BACKSCATTER LIGHT

1202 — MEASURE THE FIRST BEAT FREQUENCY FROM INTERFERING THE OPPOSITELY TIME DELAYED BACKSCATTER LIGHT WITH THE REFERENCE LIGHT DERIVED FROM THE LASER BEAM

END

FIG. 12

1300

1302 — SPECIFICATION AND DESIGN

1304 — MATERIAL PROCUREMENT

1306 — COMPONENT AND SUBASSEMBLY MANUFACTURING

1308 — SYSTEM INTEGRATION

1310 — CERTIFICATION AND DELIVERY

1312 — IN SERVICE

1314 — MAINTENANCE AND SERVICE

FIG. 13

1400

AIRCRAFT

1402 — AIRFRAME       INTERIOR — 1406

SYSTEMS

PROPULSION SYSTEM       ELECTRICAL SYSTEM

1408   1412       1410   1414

HYDRAULIC SYSTEM       ENVIRONMENTAL SYSTEM

1404

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016377721 A1